# EUROPEAN PATENT APPLICATION

(11) **EP 1 614 664 A1**
(43) Date of publication of application: **11.01.2006**
(21) Application number: 04076932.5
(22) Date of filing: 05.07.2004
(51) Int. Cl.: C03B 23/02, C03C 3/093, C03C 17/04, C09D 11/02, C03B 13/08, C03B 17/02, C03B 17/04

(54) **Method for preparing a relief glass substrate with a durable coloured pattern**

(71) Applicant: NEDERLANDSE ORGANISATIE VOOR TOEGEPAST-NATUURWETENSCHAPPELIJK ONDERZOEK TNO, 2628 VK Delft (NL)
(72) Inventor: Berden, Stijn Ruud Louis, 5553 BG Valkenswaard (NL); Heesen, Richard, 5612 CG Eindhoven (NL); Feenstra, Frits Kornelis, 5673 RM Nuenen (NL); Schasfoort, Gerard Frans Jozef, 5612 DH Eindhoven (NL); Houben, René Jos, 5631 GL Eindhoven (NL)
(74) Representative: Winckels, Johannes Hubertus F.

(57) **Abstract**

The invention provides a method for preparing a relief glass substrate with a durable coloured pattern, in which method the coloured patterns is allowed to fuse into the glass substrate during the formation of the relief glass substrate.

## Description

The present invention relates to a method for preparing a relief glass substrate with a durable coloured pattern.

There exists a variety of methods to provide a coloured pattern on a glass substrate. Suitable methods include screen printing processes, laminating processes, staining processes or firing processes whereby ceramic inks are fired into the glass substrate. Most often a screen printing process is applied followed by a firing process. However, such combined process is rather complicated and expensive, because for each separate colour a new screen needs to be made, as a result of which only a limited number of colours is usually applied.

It is also known in the art to prepare decorated glass panels using printing techniques. In this respect reference can, for instance, be made to US 6,336,723 in which document a method has been described for decorating sheets of glass with ink-based patterns. Decorated glass sheets are for example used in the building industry. A particular class of decorated glass sheets are decorated glass sheets that have been provided with a relief, so-called free-formed glass products. Such relief glass sheets are increasingly used in modern architecture. They conventionally consist of two parts, viz. a flat, i.e. two-dimensional, decorated coloured glass sheet and a non-decorated relief glass sheet. The two types of glass sheets are then placed in a double glazing structure to establish a three-dimensional type of coloured glass sheet. It will be evident that the production of such decorated relief glass sheets has the disadvantage that a multi-step process is required. Moreover, the durability of the decorations leave considerable room for improvement, due to the frequent use of low melting point frits (i.e. frits having a melting point below 629 C°).

Object of the present invention is to provide an advanced method for preparing relief glass substrates with a coloured pattern.

Surprisingly, it has now been found that this can be realised by allowing the coloured pattern to be fused with the glass substrate during the formation of the relief glass substrate.

Accordingly, the present invention relates to a method for preparing a relief glass substrate with a durable coloured pattern, which method comprises the steps of:
(a) providing a glass substrate;
(b) applying onto the glass substrate, glass frit and one or more inorganic pigments, wherein at least the one or more inorganic pigments are applied onto the glass substrate in the form of a pattern using a printing technique, and wherein the one or more inorganic pigments have an temperature stability which is at least equal to the firing temperature of the glass frit;
(c) placing the glass substrate obtained in step (b) on a mould;
(d) exposing the glass substrate when it is placed on the mould to a temperature at which the glass substrate melts, deforms and takes the desired form, and the one or more inorganic pigments and the glass frit are fired, so as to allow the relief glass product with a coloured pattern to be formed; and
(e) cooling the relief glass substrate with a coloured pattern so obtained.

The method according to the present invention is not only much less complicated, it also provides improved decorated glass products in terms of colour stability and intensity.

In the context of the present invention the phrase "the coloured patterns is fused with the glass substrate" means that the coloured pattern can be fused on top of the surface of the glass substrate (on-glass), just underneath the surface of the glass substrate (in-glass) or deep inside the glass substrate (under-glass).

It will be understood that in step (d) the molten glass will usually deform and take the form provided for by the shape of the mould. However, this is not necessarily always the case. It may for instance be the case that the relief glass product will obtain only part of the shape of the mould, because step (d) is, for instance, not allowed to take place for a sufficient period of time, as a result of which not the complete mould may have been filled with molten glass. Another reason may be that the mould is simply too big for the given amount of molten glass.

In the method according to the present invention use can be made of a variety of glass substrates. Suitably, use is made of a glass substrate which comprises untempered glass. Preferably, use is made a glass substrate which comprises non-laminated or laminated glass. More preferably, use is made of a glass substrate which comprises float glass, included all sorts of treated float glass such as sand blasted glass, etched glass, and the like.

The one or more inorganic pigments to be used in accordance with the present invention have an temperature stability which is at least equal to the firing temperature of the glass frit. With the expression "temperature stability which is at least the firing temperature of the glass frit" is meant that the one or more inorganic pigments are at least chemically and physically stable up to the firing temperature of the glass frit, so as to ensure that the firing temperature cycle can sufficiently take place.

Suitably, the one or more inorganic pigments have a temperature stability of at least 720°C, preferably in the range of from 720-1200°C, and more preferably in the range of from 720-900°C. Such inorganic pigments ensure an enhanced colour intensity and durability of the colour pattern when compared with the pigments used in the known methods.

Suitable inorganic pigments include pigments that are based on the following elements: copper, magnesium, zinc, gold, silver, zirkonium, vanadium, aluminium, iron, antimony, chromium, manganese, cobalt, cesium, nickel, cadmium, sulphur, titanium, tin, silicium, praseodymium and selenium and or in combinations of elements. It will be understood that the pigments are usually oxides of these elements. Usually, the so-called four colour system will be used, which include the colours yellow, magenta, cyan and black. For the colour yellow pigments that are based on copper, zinc, chromium and aluminium can be used. For the colour magenta pigments that are based on gold can be used, whereas for the colour cyan pigments can be used that are based on cobalt, zinc and silicon. For the colour black pigments can be used that are based on cobalt, manganese, iron, chromium and zinc.

In accordance with the present invention any known printing technique can be used. Preferably, use is made of a printing technique such as screen printing. More preferably, use is made of a digital air brush printing technique. Most preferably, use is made of a digital ink jet printing technique. The actual choice of the printing technique to be used will depend among others on the number of dots per inch required, colour intensity and the type of ink.

In step (b) of the method in accordance with the present invention, the pattern can be applied onto the glass substrate in various ways. Preferably, a pattern of the one or more inorganic pigments is firstly applied onto the substrate using a printing technique, after which a pattern of the glass frit can be applied onto the pattern of the one or more inorganic pigments. Alternatively, instead of a pattern of glass frit, a uniform layer of glass frit can be applied onto the glass substrate. Preferably, the glass frit is applied as a uniform layer onto the glass substrate by means of a screen printing technique or by means of an air brush technique.

In yet another embodiment of the present invention, first glass frit is applied onto the glass substrate in the form of a pattern or a uniform layer, after which a pattern of the one or more inorganic pigments is applied onto the pattern of glass frit or the uniform layer of glass frit. In that case, the glass frit is preferably firstly applied onto the glass substrate in the form of a uniform layer applied by means of a screen printing technique or by means of an air brush technique.

Most preferably, a mixture of the one or more inorganic pigments and the glass frit is applied onto the glass substrate in the form of a pattern using the printing technique.

The skilled person will appreciate that the one or more inorganic pigments and the glass frit to be used need to have physical parameters which make them suitable for use as an ink in printing techniques.

The temperature applied in step (d) is suitably in the range of from 650-1200°C, preferably in the range of from 750-900°C, more preferably in the range of from 780-870°C, and most preferably in the range of from 800-860°C.

Suitably, the glass substrate is exposed to an elevated temperature in step (d) for a period of time of up to 400 minutes, preferably in the range of from 10-40 minutes, and more preferably in the range of from 15-30 minutes. It should be noted, however, that these times heavily depend on the thickness of the glass substrate to be applied. The thinner the glass substrate the sooner it will melt.

The results of the firing in step (d) do also depend on the type of oven which is to be used. The firing step can take place under different conditioned atmospheres like oxidising or reducing conditions, depending on the glass substrate, frits and pigments to be used.

In the process according to the present invention one or more different types of frit can be used, as long as the temperature stability of the pigments is at least the firing temperature of the glass frits to be used. Preferably, one type of glass frit is used.

In the method according to the present invention, the cooling of the glass substrate in step (e) is preferably done in a controlled manner. This can be realized by slowly cooling down to room temperature in order to enable dissipation of stresses in the glass. It is also possible to introduce a tempering step in the process in order to obtain stained (also known as tempered) products. In the latter case, the glass substrate obtained in step (d) can for instance be cooled down to the tempering temperature, which depends on the type and thickness of the glass substrate to be used, and which is typically around 530C°, after which the temperature is quickly forced down to room temperature by applying forced cooling of the glass. By doing so, the outside of the glass is intentionally cooled quicker than the inside of the glass. Preferably, both sides of the glass are cooled equally, in order to introduce thermal stresses in the glass. One will need to manipulate the hot glass panel to enable equally forced cooling on both sides of the glass panel.

In accordance with the present invention a pattern can be applied onto one side or both sides of the glass substrate. It is further noted that the end result also depends on the circumstance whether one or more inorganic pigments are applied on the tin-side or on the non-tin-side of the glass substrate, in case float glass is used.

The present invention also relates to a method for preparing a glass substrate with a coloured pattern, which method comprises the steps of:
(a) providing a glass substrate;
(b) applying onto the glass substrate, glass frit and one or more inorganic pigments, wherein at least the one or more inorganic pigments are applied onto the glass substrate in the form of a pattern using a printing technique, and wherein the one or more inorganic pigments have an temperature stability which is at least equal to the firing temperature of the glass frit;
(c) exposing the glass substrate to a temperature at which the substrate melts and the one or more inorganic pigments and glass frits are fired, so as to allow the glass substrate with a coloured pattern to be formed; and
(d) cooling the glass substrate with a coloured pattern so obtained.

The coloured pattern may be any coloured decoration, design or image. One or more colours can be used in the pattern. It will be understood that the coloured pattern will be produced on the glass substrate from a model of the desired pattern using a reproduction device comprising a device for capturing images and image-processing software. Such reproduction devices and image-processing software is as such well known, and for instance described in Microsoft Photo Editor 3.0.2.3 © from Microsoft Corporation.

The glass substrates obtained in accordance with the methods according to the present invention display unique properties in terms of colour stability and colour intensity. Therefore, the present invention also relates to a relief glass substrate obtainable by a method according to the present invention.

Suitable glass substrates in accordance with the present invention include glass panels for use in the building industry, containers made of glass such as for instance glasses and bottles, glazing used in the motor vehicle industry such as car glass, architectural glass such as facades and balconies, sanitary products such as washbasins, bathtubs and wall panels, glass floors, glass closets, decoration objects, hot plates, oven doors, and art and design objects.

### Example

A four colour ink system to be used in accordance with the present invention was prepared as follows. Each colour was prepared separately. The colour cyan was prepared by dissolving 80 g of the Johnson Matthey pigment Cyan 97N4000 into 18 g Disperse-Ayd W 28 (55% solids) and 52 g demineralised water, whereby the ratio of pigment : Disperse-Ayd W 28 : demineralised water was 80 : 18 : 52 by weight. The pigment consisted of pigment particles on which a glass frit has been sintered with a melting point of 750°C. Subsequently, a water based dispersion was made by dispersing the solution obtained in a mixing pot (370cc) with 220 grams of glass beads with a diameter of 3 mm. A Dispermat CV was used with a double Nylon disk (45mm diameter) to mix the ingredients. The ingredients were mixed at 11000 rpm for 15 minutes. If the temperature rise was higher than 50°C, the mixing speed was reduced to 2000 rpm. The size of the product so obtained was measured after cooling down to room temperature using a Hegman ruler (0-15µm), and values of diameter were found to be between 3-6 µm. After this, the glass beads were filtered out. The other three colours (i.e. yellow (97H4000), black (97E1000) and magenta (97A4000), all from Johnson Matthey) were prepared in a similar manner as the colour cyan.

Then the four pigment mixtures obtained were immersed in the TCG Michelangelo digital air brush machine which printed a preselected pattern on unprepared float glass.

After drying, the coloured pattern was put in an over onto a relief mould and heated. In the oven (under ambient atmosphere) the temperature was raised in 500 minutes from room temperature to 820°C, and subsequently cooled to room temperature, using the following five steps:
1. The temperature was raised from 20°to 500°C using a heating rate of 250°C/hour, without applying dwelling time;
2. The temperature was raised from 500°C to 820°C, applying a dwelling time of 20 minutes at 820°C;
3. The oven was cooled down from 820°C to 540°C at a cooling rate of 100°C/hour, applying a dwelling time of 10 minutes at 540°C;
4. The oven was allowed to cool down from 540°to 460°C using a cooling rate of 40°C/hour, without applying dwelling time; and
5. The oven cooled down from 460°C to room temperature at a cooling rate of 80°C/hour.

After this cycle of process steps, a multi-colour fired glass plate was obtained with a relief corresponding to the mould.

## Claims

1. A method for preparing a relief glass substrate with a durable coloured pattern, which method comprises the steps of:
(a) providing a glass substrate;
(b) applying onto the glass substrate, glass frit and one or more inorganic pigments, wherein at least the one or more inorganic pigments are applied onto the glass substrate in the form of a pattern using a printing technique, and wherein the one or more inorganic pigments have an temperature stability equal to or better than the firing temperature of the glass frit of at least 720 C°
(c) placing the glass substrate obtained in step (b) on a mould;
(d) exposing the glass substrate when it is placed on the mould to a temperature at which the glass substrate melts and the one or more inorganic pigments and the glass frit are fired, so as to allow the relief glass product with a coloured pattern to be formed; and
(e) cooling the relief glass product with a coloured pattern so obtained.

2. A method according to claim 1, wherein the glass substrate comprises float glass.

3. A method according to claim 1 or 2, wherein in step (b) the one or more inorganic pigments as well as the glass frit are applied onto the glass substrate in the form of a pattern using the printing technique.

4. A method according to claim 3, wherein in step (b) a mixture of the one or more inorganic pigments and the glass frit is applied onto the glass substrate in the form of a pattern using the printing technique.

5. A method according to any one of claims 1-4, wherein the one or more inorganic pigments have an temperature stability which at least equal to 720°C.

6. A method according to claim 5, wherein the one or more inorganic pigments have an temperature stability which is at least equal to 720-1200°C.

7. A method according to any one of claims 1-6, wherein the printing technique is a digital printing technique.

8. A method according to any one of claims 1-7, wherein the temperature in step (d) is in the range of from 650-1200°C.

9. A method according to claim 8, wherein the temperature in step (d) is in the range of from 750-900°C.

10. A method according to any one of claims 1-9, wherein the glass substrate is exposed to the elevated temperature in step (d) for a period of time of up to 400 minutes.

11. A method according to claim 10, wherein the glass substrate is exposed to the elevated temperature in step (d) for a period of time in the range of from 10-40 minutes.

12. A method according to claim 11, wherein the glass substrate is exposed to the elevated temperature in step (d) for a period of time in the range of from 15-30 minutes.

13. A method according to any one of claims 1-12, wherein the relief glass product with a coloured pattern is cooled in step (e) in a controlled manner.

14. A method for preparing a glass substrate with a coloured pattern, which method comprises the steps of:
(a) providing a glass substrate;
(b) applying onto the glass substrate, glass frit and one or more inorganic pigments, wherein at least the one or more inorganic pigments are applied onto the glass substrate in the form of a pattern using a printing technique, and wherein the one or more inorganic pigments have an temperature stability which is at least equal to the firing temperature of the glass frit;
(c) exposing the glass substrate to a temperature at which the substrate melts and the one or more inorganic pigments and glass frit are fired, so as to allow the glass substrate with a coloured pattern to be formed; and
(d) cooling the glass substrate with a coloured pattern so obtained.

15. A (relief) glass substrate with a coloured pattern obtainable by a method according to any one of claims 1-14.
